(19) Europäisches Patentamt
European Patent Office
Office européen des brevets

(11) EP 2 827 431 A1

(12) **EUROPEAN PATENT APPLICATION**
published in accordance with Art. 153(4) EPC

(43) Date of publication:
21.01.2015 Bulletin 2015/04

(21) Application number: 13761007.7

(22) Date of filing: 12.03.2013

(51) Int Cl.:
H01M 10/052 (2010.01)   H01M 4/131 (2010.01)
H01M 4/485 (2010.01)   H01M 10/0568 (2010.01)
H01M 10/0569 (2010.01)

(86) International application number:
PCT/JP2013/056860

(87) International publication number:
WO 2013/137273 (19.09.2013 Gazette 2013/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 15.03.2012   JP 2012058951

(71) Applicant: Kabushiki Kaisha Toshiba
Minato-ku
Tokyo 105-8001 (JP)

(72) Inventors:
• SARUWATARI, Hidesato
  Tokyo 105-8001 (JP)
• KURIYAMA, Hiromichi
  Tokyo 105-8001 (JP)
• MATSUNO, Shinsuke
  Tokyo 105-8001 (JP)
• YAMAMOTO, Dai
  Tokyo 105-8001 (JP)

(74) Representative: Hoffmann Eitle
Patent- und Rechtsanwälte PartmbB
Arabellastraße 30
81925 München (DE)

(54) **NON-AQUEOUS ELECTROLYTE SECONDARY BATTERY AND BATTERY PACK**

(57) Technical Problem

An object of the present invention is to provide a nonaqueous electrolyte secondary battery which is excellent in charge/discharge cycle and a battery pack comprising the nonaqueous electrolyte secondary battery.

Solution to Problem

A nonaqueous electrolyte secondary battery according to the embodiments includes a positive electrode, a negative electrode, a separator provided between the positive electrode and the negative electrode, and a nonaqueous electrolyte, wherein the negative electrode contains as an active material a titanium composite oxide of which a lithium absorption/release reaction potential is higher than 0.5 V vs. Li/Li$^+$, and the nonaqueous electrolyte contains at least one element selected from B and S. The negative electrode has a Li/C composition ratio of 0.20 to 0.50 and a Li/Ti composition ratio of 0.5 to 5.0 in an element composition at a surface of the negative electrode measured by X-ray photoelectron spectroscopy.

FIG. 1

**Description**

Technical Field

Embodiments of the invention relate to a nonaqueous electrolyte secondary battery and a battery pack comprising the nonaqueous electrolyte secondary battery.

Background Art

A nonaqueous electrolyte secondary battery comprising a negative electrode containing a titanium composite oxide of which a lithium absorption/release reaction potential is higher than 0.5 V vs. Li/Li$^+$ is characterized by an excellent charge/discharge cycle property thanks to a small active material volume change which is caused by charge/discharge and a high operation potential at charge/discharge as compared to a nonaqueous electrolyte secondary battery using a carbon material for a negative electrode.

On the other hand, since the nonaqueous electrolyte secondary battery comprising the titanium composite oxide in the negative electrode has the high operation potential, it has a problem that it is difficult to form on a surface of the titanium composite oxide negative electrode a film, so-called solid electrolyte interface (SEI), which is formed on a surface of the carbon negative electrode to inhibit a side reaction.

Citation List

Patent Literature

Patent Literature 1: Jpn. Pat. Appln. KOKAI Publication No. 2007-53083
Patent Literature 2: Jpn. Pat. Appln. KOKAI Publication No. 2008-91327

Summary of Invention

Technical Problem

An object of the present invention is to provide a nonaqueous electrolyte secondary battery which is excellent in charge/discharge cycle and a battery pack comprising the nonaqueous electrolyte secondary battery.

Solution to Problem

A nonaqueous electrolyte secondary battery according to the embodiments includes a positive electrode, a negative electrode, a separator provided between the positive electrode and the negative electrode, and a nonaqueous electrolyte, wherein the negative electrode contains as an active material a titanium composite oxide of which a lithium absorption/release reaction potential is higher than 0.5 V vs. Li/Li$^+$, and the nonaqueous electrolyte contains at least one element selected from B and S. The negative electrode has a Li/C composition ratio of 0.20 to 0.50 and a Li/Ti composition ratio of 0.5 to 5.0 in an element composition at a surface of the negative electrode measured by X-ray photoelectron spectroscopy.

Brief Description of Drawings

FIG. 1 is a partially broken front view showing a nonaqueous electrolyte secondary battery of one embodiment.
FIG. 2 is a perspective view showing a battery pack according to another embodiment.
FIG. 3 is a circuit diagram showing a connection state of the battery pack of the embodiment.

Description of Embodiments

Hereinafter, embodiments will be described.
A nonaqueous electrolyte secondary battery according to one embodiment satisfies the conditions that: a negative electrode contains a titanium composite oxide of which a lithium absorption/release reaction potential is higher than 0.5 V vs. Li/Li⁺; a nonaqueous electrolyte contains at least one element selected from B and S; and the negative electrode has a Li/C composition ratio of 0.20 to 0.50 and a Li/Ti composition ratio of 0.5 to 5.0 in an element composition at a surface of the negative electrode measured by X-ray photoelectron spectroscopy and, therefore, is largely improved in charge/discharge cycle property.

Examples of an X-ray photoelectron spectroscopic apparatus include, but are not particularly limited to, AXIS series manufactured by Shimadzu Corporation.

It is considered that a state in which a film equivalent to a so-called SEI discussed in relation to carbon negative electrodes is formed is established in the case where the element composition of the negative electrode surface satisfies the above-described conditions.

In the case where the Li/C composition ratio is smaller than 0.20, resistance is so large that it is difficult to attain the effect of cycle property improvement. In the case where the Li/C composition ratio is larger than 0.50, a resistance increase over cycles becomes large to make it difficult to attain the effect of cycle property improvement.

In the case where the Li/Ti composition ratio is smaller than 0.5, a resistance increase over cycles becomes large to make it difficult to attain the effect of cycle property improvement. In the case where the Li/Ti composition ratio is larger than 5, resistance is so large that it is difficult to attain the effect of cycle property improvement. The Li/Ti composition ratio may more preferably be within the range of 0.6 to 4.5.

A content of B or S in the nonaqueous electrolyte may preferably be within the range of $1 \times 10^{-5}$ to 2 wt%. In the case where the content of B or S is smaller than $1 \times 10^{-5}$ wt%, it is difficult to keep the negative electrode surface state within the ranges of the Li/C composition ratio of 0.20 to 0.50 and the Li/Ti composition ratio of 0.5 to 5.0. In the case where the content of B or S is larger than 10 wt%, there is a tendency that a resistance of the electrolyte per se is increased, the Li/C composition ratio becomes smaller than 0.20, or the Li/Ti composition ratio exceeds 5.0, thereby making it difficult to attain the effect of cycle property improvement.

Examples of the titanium composite oxide which is the negative electrode active material of which the lithium absorption/release reaction potential is higher than 0.5 V vs. Li/Li⁺ include lithium titanate represented by the chemical formula $Li_{4+x}Ti_5O_{12}$. In the negative electrode active material, an average particle size may preferably be within the range of 0.05 to 2 $\mu$m, and a specific surface area may preferably be within the range of 2 to 25 m²/g. Crystallinity of the active material per se is deteriorated when the average particle size is smaller than 0.05 $\mu$m, while a lithium ion diffusion distance becomes too long when the average particle size is larger than 2 $\mu$m, thereby making it difficult to attain the effect of cycle property improvement. Resistance of the battery per se is high when the specific surface area is smaller than 2 m²/g, while a resistance increase over cycles becomes large when the specific surface area is larger than 25 m²/g, thereby making it difficult to attain the effect of cycle property improvement.

In the present specification, the average particle size of the negative electrode active material means the same as a 50% frequency size. It is possible to measure the average particle size by a laser diffraction/light scattering particle size/grain size distribution measurement apparatus. Examples of the apparatus include Microtrack manufactured by Nikkiso Co., Ltd.

The specific surface area of the negative electrode active material is measured by a specific surface area/pore distribution measurement apparatus utilizing gas adsorption phenomenon. Examples of the apparatus include an automatic specific surface area/pore distribution measurement apparatus (BELSORP-mini) manufactured by BEL Japan, Inc.

Hereinafter, components of the nonaqueous electrolyte secondary battery according to the embodiment will be described.

1) Positive Electrode

The positive electrode has a current collector and a positive electrode layer (positive electrode active material layer) which is carried on one or both of surfaces of the current collector and contains a positive electrode active material, a conductive agent, and a binder. It is possible to produce the positive electrode by, for example, adding the conductive agent and the binder to the positive electrode active material in the form of a powder, suspending the mixture into an appropriate solvent, coating the suspension (slurry) onto the current collector, and drying and pressing the coating to obtain a strip-shaped electrode.

Examples of the positive electrode active material include manganese dioxide ($MnO_2$), iron oxide, copper oxide, nickel oxide, $Li_aMnO_2$, a lithium cobalt composite oxide (e.g. $Li_aCoM_hO_2$, wherein M is at least one element or two or more elements selected from the group consisting of Al, Cr, Mg, and Fe and $0 \leq h \leq 0.1$), a lithium manganese cobalt composite oxide (e.g. $LiMn_{1-g-h}Co_gM_hO_2$, wherein M is at least one element or two or more elements selected from the group consisting of Al, Cr, Mg, and Fe and $0 \leq g \leq 0.5$), a lithium manganese nickel composite oxide (e.g. $LiMn_jNi_jM_{1-2j}O_2$, wherein M is at least one element or two or more elements selected from the group consisting of Co, Cr, Al, Mg, and Fe and $1/3 \leq j \leq 1/2$, such as $LiMn_{1/3}Ni_{1/3}Co_{1/3}O_2$ and $LiMn_{1/2}Ni_{1/2}O_2$), a spinel type lithium manganese composite oxide (e.g. $Li_aMn_{2-b}M_bO_4$, wherein M is at least one element or two or more elements selected from the group consisting of Al, Cr, Ni, and Fe), a spinel type lithium manganese nickel composite oxide (e.g. $Li_aMn_{2-b}Ni_bO_4$), a lithium phosphorus

oxide having olivine structure (e.g. $Li_aFePO_4$, $Li_aFe_{1-b}Mn_bPO_4$, $Li_aCoPO_4$, etc.), iron sulfate ($Fe_2(SO_4)_3$), and vanadium oxide (e.g. $V_2O_5$). As used herein, a and b may preferably be $0 < a \leq 1.2$ and $0 \leq b \leq 1$. Other examples of the positive electrode active material include a conductive polymer material such as polyaniline and polypyrrole, a disulfide-based polymer material, sulfur (S), an organic material such as carbon fluoride, and an inorganic material.

More preferred examples of the positive electrode active material include the lithium cobalt composite oxide, lithium manganese nickel composite oxide, spinel type lithium manganese composite oxide, spinel type lithium manganese nickel composite oxide, lithium manganese cobalt composite oxide, and lithium iron phosphate.

An average particle size of the positive electrode active material may preferably be 1 $\mu$m or more but 20$\mu$ m or less.

In the case where the binder is contained in the positive electrode active material layer, examples of the binder include polytetrafluoroethylene (PTEF), polyvinylidene fluoride (PVdF), and a fluorine-based rubber.

The conductive agent may be contained in the positive electrode active material. Examples of the conductive agent include a carbonaceous material such as acetylene black, carbon black, graphite, and the like.

A blending ratio among the positive electrode active material, the conductive agent, and the binder may preferably be kept to 73 to 95 wt% of the positive electrode active material, 3 to 20 wt% of the conductive agent, and 2 to 7 wt% of the binder.

The positive electrode current collector may preferably be formed by using an aluminum foil or an aluminum alloy foil. The aluminum foil or the aluminum alloy foil may preferably have an average crystal particle size of 50 $\mu$m or less, more preferably 30 $\mu$m or less, further preferably 5 $\mu$m or less. Since it is possible to dramatically enhance strength of the aluminum foil or the aluminum alloy foil when the average crystal particle size is 50 $\mu$m or less, it is possible to press the positive electrode with a high pressure to realize high density thereof, thereby realizing an increase in battery capacity.

The average crystal particle size can be determined as follows. A constitution of a surface of the current collector is observed with an optical microscope to detect the number n of crystal grains existing in 1 x 1 mm. Using this n, an average crystal grain area S is determined from $S = 1 \times 10^6/n$ ($\mu m^2$). The average crystal particle size d ($\mu$m) is calculated by using the following formula (A) and the obtained value of S:

$$d = 2(S/\pi)^{1/2} \qquad (A).$$

The average crystal particle size of the aluminum foil or the aluminum alloy foil is varied depending on complicated influences from a plurality of factors such as a material constitution, impurity, processing conditions, a heat treatment history, and annealing conditions. It is possible to adjust the crystal particle size by combining the factors during a current collector production process.

A thickness of the aluminum foil or the aluminum alloy foil may preferably be 20 $\mu$m or less, more preferably 15 $\mu$m or less. Purity of the aluminum foil may preferably be 99 mass% or more. As the aluminum alloy, the one containing an element such as magnesium, zinc, and silicon is preferred. On the other hand, a content of a transition metal such as iron, copper, nickel, and chrome may preferably be 1 mass% or less.

2) Negative Electrode

The negative electrode has a current collector and a negative electrode layer (negative electrode active material layer) which is carried on one or both of surfaces of the current collector and contains a negative electrode active material, a conductive agent, and a binder. It is possible to produce the negative electrode by, for example, adding the conductive agent and the binder to the negative electrode active material in the form of a powder, suspending the mixture into an appropriate solvent, coating the suspension (slurry) onto the current collector, and drying and pressing the coating to obtain a strip-shaped electrode.

The negative electrode current collector may preferably be formed by using, for example, a copper foil, an aluminum foil, or an aluminum alloy foil. The aluminum foil or the aluminum alloy foil forming the negative electrode current collector may preferably have an average crystal particle size of 50 $\mu$m or less, more preferably 30 $\mu$m or less, further preferably 5 $\mu$m or less. It is possible to determine the average crystal particle size by the above-described method. It is possible to dramatically enhance strength of the aluminum foil or the aluminum alloy foil when the average crystal particle size is 50 $\mu$m or less. Therefore, it is possible to press the negative electrode with a high pressure to realize high density thereof, thereby realizing an increase in negative electrode capacity. Also, it is possible to prevent deterioration due to melting and corrosion of the current collector at an overdischarge cycle under a high temperature environment (40°C or more). Therefore, it is possible to suppress an increase of negative electrode impedance. Further, it is possible to improve output characteristics, rapid charging, and charge/discharge cycle property.

The average crystal particle size of the aluminum foil or the aluminum alloy foil is varied depending on complicated influences from a plurality of factors such as a material constitution, impurity, processing conditions, a heat treatment history, and annealing conditions. It is possible to adjust the crystal particle size by combining the factors during a current collector production process.

A thickness of the aluminum foil or the aluminum alloy foil may preferably be 20 $\mu$m or less, more preferably 15 $\mu$m or less. Purity of the aluminum foil may preferably be 99 mass% or more. As the aluminum alloy, the one containing an element such as magnesium, zinc, and silicon is preferred. On the other hand, a content of a transition metal such as iron, copper, nickel, and chrome may preferably be 1 mass% or less.

The negative electrode active material contains the titanium composite oxide of which a lithium absorption/release reaction potential is higher than 0.5 V vs. Li/Li$^+$. Examples of the titanium composite oxide of which the lithium absorption/release reaction potential is higher than 0.5 V vs. Li/Li$^+$ include spinel type lithium titanate represented by $Li_{4+x}Ti_5O_{12}$ (x is varied within the range of $-1 \leq x \leq 3$ depending on a charge/discharge reaction), ramsdellite type $Li_{2+x}Ti_5O_{12}$ (x is varied within the range of $-1 \leq x \leq 3$ depending on a charge/discharge reaction), a metal composite oxide containing Ti and at least one element selected from the group consisting of P, V, Sn, Cu, Ni, and Fe, and the like. Examples of the metal composite oxide containing Ti and at least one element selected from the group consisting of P, V, Sn, Cu, Ni, and Fe include $TiO_2$-$P_2O_5$, $TiO_2$-$V_2O_5$, $TiO_2$-$P_2O_5$-$SnO_2$, and $TiO_2$-$P_2O_5$-MO (M is at least one element selected from the group consisting of Cu, Ni, and Fe). The metal composite oxide may preferably have low crystallinity and a microstructure in which a crystal phase and an amorphous phase are coexistent or an amorphous phase alone exists. The metal composite oxide comprising the microstructure is capable of largely improving the cycle property. The metal composite oxide is changed into a lithium titanium composite oxide when lithium is absorbed by charging. Among the lithium titanium composite oxides, the spinel type lithium titanate is preferred due to its excellent cycle property.

The negative electrode active material may contain another active material such as a carbonaceous material and a metal compound.

Examples of the carbonaceous material include natural graphite, artificial graphite, cokes, vapor grown carbon fiber, mesophase pitch-based carbon fiber, spherical carbon, and sintered resin carbon. More preferred examples of the carbonaceous material include the vapor grown carbon fiber, mesophase pitch-based carbon fiber, and spherical carbon. Interplanar spacing d002 on (002) plane of the carbonaceous material detected by X-ray diffraction may preferably be 0.34 nm or less.

As the metal compound, a metal sulfide or a metal nitride may be used. For example, it is possible to use titanium sulfide such as $TiS_2$, molybdenum sulfide such as $MoS_2$, iron sulfide such as $FeS$, $FeS_2$, and $Li_xLeS_2$ as the metal sulfide. As the metal nitride, a lithium cobalt nitride (e.g. $Li_sCo_tN$, wherein $0 < s < 4$ and $0 < t < p$), for example, may be used.

Examples of the binder include polytetrafluoroethylene (PTEF), polyvinylidene fluoride (PVdF), a fluorine-based rubber, a styrene butadiene rubber, and the like.

A blending ratio among the positive electrode active material, the conductive agent, and the binder may preferably be set to 73 to 96 wt% of the positive electrode active material, 2% to 20 wt% of the conductive agent, and 2 to 7 wt% of the binder.

3) Nonaqueous Electrolyte

The nonaqueous electrolyte contains a nonaqueous solvent and an electrolyte salt dissolved into the nonaqueous solvent. A polymer may be contained in the nonaqueous solvent.

As the electrolyte salt, a lithium salt such as $LiPF_6$, $LiBF_4$, $Li(CF_3SO_2)_2N$ [lithium bis(trifluoromethanesulfonyl)amide which is commonly known as LiTFSI], $LiCF_3SO_3$ (commonly known as LiTFS), $Li(C_2F_5SO_2)_2N$ [lithium bis(pentafluoroethanesulfonyl)amide which is commonly known as LiBETI], $LiClO_4$, $LiAsF_6$, $LiSbF_6$, lithium bisoxalateborate [$LiB(C_2O_4)_2$ (commonly known as LiBOB)], lithium difluoro(trifluoro-2-oxide-2-trifluoro-methylpropinate(2-)-0,0)borate ($LiBF_2OCOOC(CF_3)_2$) [commonly known as $LiBF_2$(HHIB)] may be used. The electrolyte salts may be used alone or in combination of two or more kinds thereof. Particularly, $LiPF_6$ and $LiBF_4$ are preferred.

A concentration of the electrolyte salt may preferably be 1 to 3 mol/L. By such definition of the electrolyte salt concentration, it is possible to improve the performance in the case where a high load current is flown while simultaneously suppressing influence of a viscosity increase which can be caused by an increase in electrolyte salt concentration.

As the nonaqueous solvent, for example, propylene carbonate (PC), ethylene carbonate (EC), 1,2-dimethoxyethane (DME), $\gamma$-butyrolactone (GBL), tetrahydrofuran (THF), 2-methyltetrahydrofuran (2-MeHF), 1,3-dioxolan, sulfolane, acetonitrile (AN), diethyl carbonate (DEC), dimethyl carbonate (DMC), methylethyl carbonate (MEC), or dipropyl carbonate (DPC) may be used without particular limitation thereto. The solvents may be used alone or in combination of two or more kinds thereof.

An additive may be added to the nonaqueous electrolyte. Examples of the additive include, but are not particularly limited to, vinylene carbonate (VC), vinylene acetate (VA), vinylene butyrate, vinylene hexanoate, vinylene crotonate, catechol carbonate, and the like. A concentration of the additive may preferably be within the range of 0.1 to 3 wt% relative to 100 wt% of the nonaqueous electrolyte. A more preferred range is 0.5 to 1 wt%.

In the nonaqueous electrolyte of the present embodiment, B or S is contained. As a compound containing B, lithium tetrafluoroborate ($LiBF_4$), lithium bis(oxalate)borate (LiBOB), lithium difluoro(oxalate)borate ($LiBF_2(C_2O_4)$), lithium bis(malonate)borate, lithium bis(succinate)borate, and lithium difluoro(trifluoro-2-oxide-2-trifluoro-methylpropionate(2-)-0,0)borate are preferred. As a compound containing S, ethylene sulfite, propylene sulfite, 1,2-ethane sultone, 1,3-propane sultone, 1,4-butane sultone, 1,5-pentane sultone, 1,3-propene sultone, and 1,4-butylene sultone are preferred.

4) Separator

The separator is not particularly limited insofar as it has an insulation property, and a porous film made from a polymer such as polyolefin, cellulose, polyethylene terephthalate, and vinylon or a nonwoven cloth may be used for the separator. The materials for the separator may be used alone or in combination of two or more kinds thereof.

5) Case

As a case, a laminate film having a thickness of 0.5 mm or less or a metal container comprising a thickness of 1 mm or less is used. The metal container may more preferably have a thickness of 0.5 mm or less.

Examples of a shape of the case, or of the battery, include a flat shape (thin shape), a square shape, a cylindrical shape, a coin shape, a button shape, and the like. The battery may be adapted to both of a small size usage such as a battery to be mounted to a mobile electronic device and a large size usage such as a battery to be mounted to a two-wheel or four-wheel automobile or the like.

As the laminate film, a multilayer film obtained by sandwiching a metal layer between resin layers is used. As the metal layer, an aluminum foil or an aluminum alloy foil is preferred for the purpose of attaining a light weight. As the resin layer, a polymer material such as polypropylene (PP), polyethylene (PE), nylon, and polyethylene terephthalate (PET) may be used. The laminate film may be formed into the shape of the case by performing sealing by heat-seal.

The metal container is made from aluminum, an aluminum alloy, or the like. As the aluminum alloy, the one containing an element such as magnesium, zinc, and silicon is preferred. In the case where a transition metal such as iron, copper, nickel, and chrome is contained in the alloy, an amount thereof may preferably be 100 ppm or less.

Examples

Examples will hereinafter be described, and the present invention is not limited to the examples described below unless the examples do not depart from the gist of the present invention.

(Example A-1)

<Production of Positive Electrode>

$LiNi_{0.6}Co_{0.2}Mn_{0.2}O_2$ was used as a positive electrode active material. Graphite and acetylene black were used as a conductive agent. PvDF was used as a binder. A mixture of 85 parts by weight of the positive electrode active material, 5 parts by weight of acetylene black, 5 parts by weight of graphite, and 5 parts by weight of PVdF was dispersed into N-methylpyrrolidone (NMP) to prepare a slurry. The slurry was coated on both sides of a current collector formed from an aluminum foil having a thickness of 15 $\mu$m, followed by drying the coating, and then press-molding was performed to produce a positive electrode comprising a positive electrode active material layer on each side of the current collector. The positive electrode active material layer on each of the sides had a thickness of 50 $\mu$m and a density of 3.30 g/cm$^3$.

<Production of Negative Electrode>

$Li_4Ti_5O_{12}$ having an average particle size of 0.9 $\mu$m and a specific surface area of 8 m$^2$/g was used as a negative electrode active material. Graphite was used as the conductive agent. PVdF was used as a binder. A mixture of 90 parts by weight of the negative electrode active material, 5 parts by weight of graphite, and 5 parts by weight of PVdF was dispersed into N-methylpyrrolidone (NMP) to prepare a slurry. The slurry was coated on both sides of a current collector formed from an aluminum foil having a thickness of 15 $\mu$m, followed by drying the coating, and then press-molding was performed to produce a negative electrode comprising a negative electrode active material layer on each side of the current collector. The negative electrode active material layer on each of the sides had a thickness of 65 $\mu$m and a density of 2.40 g/cm$^3$.

<Preparation of Nonaqueous Electrolyte>

A nonaqueous electrolyte was prepared by mixing a mixture solvent obtained by mixing propylene carbonate (PC) and diethyl carbonate (DEC) at a volume ratio of 1:2, 12 wt% $LiPF_6$, 3 wt% $LiBF_4$, and 1 wt% propane sultone.

<Assembly of Battery>

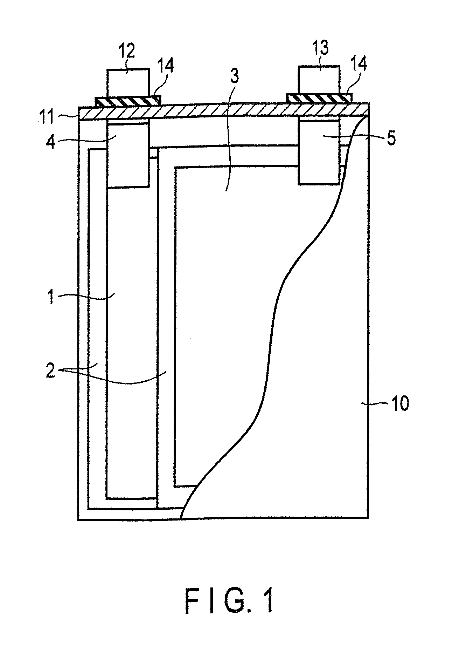

A nonaqueous electrolyte secondary battery comprising the structure shown in FIG. 1 was produced. A container 10 which was a bottomed rectangular housing formed from aluminum having a thickness of 0.3 mm and an aluminum lid 11 to which a positive electrode terminal 13 was fixed and a negative electrode terminal 12 was fixed by caulking via an insulating resin 14 were prepared. A separator 2 formed from a cellulose nonwoven having a thickness of 15 $\mu$m was impregnated with the nonaqueous electrolyte, and then a positive electrode 3 was covered with the separator 2. A negative electrode 1 was overlaid in such a manner as to face the positive electrode 3 via the separator 2 and wound in the form of a coil, thereby producing an electrode group in the form of a coil comprising lead tubs lead out from the positive electrode 3 and the negative electrode, respectively. By pressing, the electrode group was shaped to a flat shape. The positive electrode lead tub 5 of the flat electrode group was connected to one end of the positive electrode terminal 13 of the lid 11, and the negative electrode lead tub 4 was connected to one end of the negative electrode terminal 12. The electrode group together with the lid 11 was inserted into an interior of the container through an opening of the container, and the lid 11 was welded to the opening of the container 10. By the process steps described above, the nonaqueous electrolyte secondary battery comprising the structure shown in FIG. 1 and having a thickness of 0.3 mm, a width of 35 mm, and a height of 62 mm was produced.

The obtained nonaqueous electrolyte secondary battery was placed in a 25°C environment and was charged to 2.8 V with a current value of 0.2 C and then discharged to 0.5 V at a current value of 0.2 C. After that, the battery was left to stand in a 70°C environment for 24 hours for aging. The battery was charged to 2.4 V in a 25°C environment. The battery was disassembled, and a surface element composition of the withdrawn negative electrode was measured by X-ray photoelectron spectroscopy. As a result, a Li/C composition ratio was 0.33, and Li/Li composition ratio was 1.2.

A method for disassembling the battery will be described below. The charged battery was placed in a glove box under an argon atmosphere, and a sealing plate and a sealed (welded) portion of the case were ground down by using a file or the like to separate the sealing plate from the case, thereby taking out the power generation part (laminate formed of positive electrode/separator/negative electrode). The lead portion was removed in such a manner as to prevent short circuit of the power generation part, and the laminate was disassembled into the positive electrode, the separator, and the negative electrode. An analysis sample was obtained by eliminating the Li salt on the negative electrode surface by washing the negative electrode with, for example, a methyl ethyl carbonate solvent followed by drying. Also, the negative electrode was put into a solvent to dissolve the binder, and the negative electrode active material layer was removed from the current collector. The removed part was filtered to extract the negative electrode active material.

(Examples A-2 and -3, B-1 to -7, C-1 to -7, D-1 and -2)

Batteries were produced in the same manner as in Example A-1 except for changing the negative electrode active material, the electrolyte solution composition, and the after-charging aging conditions as shown in Table 1 and Table 2.

For the series of Example A, the aging conditions are varied.

For the series of Example B, the additive is varied.

For the series of Example C, the Li salt is varied.

For the series of Example D, the negative electrode active material is varied.

(Comparative Example A-1)

A nonaqueous electrolyte secondary battery was produced in the same manner as in Example A-1, and the obtained nonaqueous electrolyte secondary battery was charged to 2.8 V in a 25°C environment at a current value of 0.2 C and was discharged to 2.4 V at a current value of 0.2 C. The battery was then charged to 2.4 V in a 25°C environment. The battery was disassembled, and a surface element composition of the withdrawn negative electrode was measured by X-ray photoelectron spectroscopy. As a result, a Li/C composition ratio was found to be 0.73, and Li/Li composition ratio was found to be 0.4.

A charge/discharge cycle test in which the battery was charged to 2.6 V in a 60°C environment at 2 C and then discharged to 2.2 V at 2 C was conducted. Battery capacity of the battery of Example A-1 after 50000 cycles was 92% relative to the initial capacity, while the battery capacity of the battery of Comparative Example A-1 was 58%.

(Comparative Example A-2 and Comparative Examples D-1 and D-2)

Batteries were produced in the same manner as in Example A-1 except for changing the negative electrode active material and the after-charging aging conditions as shown in Table 1 and Table 2.

For the batteries of the series of Comparative Example A, the aging conditions are varied between the batteries of Comparative Example A.

The negative electrode active material is varied between the batteries of Comparative Example D.

As is apparent from Table 2, each of Examples A-1 to -3, B-1 to -7, C-1 to -7, and D-1 and -2 attained the cycle capacity retention of 70% or more to prove the improvement in charge/discharge cycle property.

Table 1

| | Negative Electrode Active Material | Composition of Electrolyte | | |
|---|---|---|---|---|
| | | Li salt | Additive | Solvent |
| Example A-1 | Li4Ti5O12 | 12wt%-LiPF6 + 3wt%-LiBF4 | 1wt%-propane sultone | PC : DEC = 1:2 (vol : vol) |
| Example A-2 | Li4Ti5O12 | 12wt%-LiPF6 + 3wt%-LiBF4 | 1wt%-propane sultone | PC: DEC = 1:2 (vol : vol) |
| Example A-3 | Li4Ti5O12 | 12wt%-LiPF6 + 3wt%-LiBF4 | 1wt%-propane sultone | PC: DEC = 1:2 (vol : vol) |
| Example B-1 | Li4Ti5O12 | 12wt%-LiPF6 + 3wt%-LiBF4 | 1wt%-propane sultone | PC: DEC = 1:2 (vol : vol) |
| Example B-2 | Li4TiO12 | 12wt%-LiPF6 + 3wt%-LiBF4 | 1wt%-ethylene sulfite | PC : DEC = 1:2 (vol: vol) |
| Example B-3 | Li4Ti5O12 | 12wt%-LiPF6 + 3wt%-LiBF4 | 1wt%-ethane sultone | PC : DEC = 1:2 (vol : vol) |
| Example B-4 | Li4Ti5O12 | 12wt%-LiPF6 + 3wt%-LiBF4 | 1 wt%-buthane sultone | PC : DEC = 1:2 (vol : vol) |
| Example B-5 | Li4Ti5O12 | 12wt%-LiPF6 + 3wt%-LiBF4 | 1wt%-penthane sultone | PC : DEC = 1:2 (vol : vol) |
| Example B-6 | Li4Ti5O12 | 12wt%-LiPF6 + 3wt%-LiBF4 | 1wt%-propene sultone | PC: DEC = 1:2 (vol : vol) |
| Example B-7 | Li4Ti5O12 | 12wt%-LiPF6 + 3wt%-LiBF4 | 1wt%-buthylene sultone | PC : DEC = 1:2 (vol : vol) |
| Example C-1 | Li4Ti5O12 | 12wt%-LiPF6 + 3wt%-LiBF4 + 1wt%-LiBOB | No | PC : DEC = 1:2 (vol : vol) |
| Example C-2 | Li4Ti5O12 | 12wt%-LiPF6 + 1wt%-LiBOB | No | PC : DEC = 1:2 (vol : vol) |

(continued)

|  | Negative Electrode Active Material | Composition of Electrolyte | | |
|---|---|---|---|---|
|  |  | Li salt | Additive | Solvent |
| Example C-3 | Li4Ti5O12 | 12wt%-LiPF6 + 1wt%-LiBOB | 1 wt%-propane sultone | PC : DEC = 1:2 (vol : vol) |
| Example C-4 | Li4Ti5O12 | 12wt%-LiPF6 + 1wt%-LiBF2 (Ox) | 1 wt%-propane sultone | PC : DEC = 1:2 (vol : vol) |
| Example C-5 | Li4Ti5O12 | 12wt%-LiPF6 + 1 wt%-lithium bis (malonate) borate | 1wt%-propane sultone | PC : DEC = 1:2 (vol : vol) |
| Example C-6 | Li4Ti5O12 | 12wt%-LiPF6 + 1wt%-lithium bis (succinate) borate | 1wt%-propane sultone | PC : DEC = 1:2 (vol : vol) |
| Example C-7 | Li4Ti5O12 | 12wt%-LiPF6 + 1wt%-lithium difluoro (trifluoro-2-oxide-2-trifluoro-methylpropionate(2-)-0,0) borate | 1wt%-propane sultone | PC : DEC = 1:2 (vol : vol) |
| Example D-1 | TiO2 | 12wt%-LiPF6 + 3wt%-LiBF4 | 1wt%-propane sultone | PC : DEC = 1:2 (vol : vol) |
| Example D-2 | TiO2(B) | 12wt%-LiPF6 + 3wt%-LiBF4 | 1wt%-propane sultone | PC : DEC = 1:2 (vol : vol) |
| Comparative Example A-1 | Li4Ti5O12 | 12wt%-LiPF6 + 3wt%-LiBF4 | 1wt%-propane sultone | PC : DEC = 1:2 (vol : vol) |
| Comparative Example A-2 | Li4Ti5O12 | 12wt%-LiPF6 + 3wt%-LiBF4 | 1wt%-propane sultone | PC : DEC = 1:2 (vol : vol) |
| Comparative Example D-1 | TiO2 | 12wt%-LiPF6 + 3wt%-LiBF4 | 1wt%-propane sultone | PC : DEC = 1:2 (vol : vol) |
| Comparative Example D-2 | TiO2(B) | 12wt%-LiPF6 + 3wt%-LiBF4 | 1wt%-propane sultone | PC : DEC = 1:2 (vol : vol) |

Table 2

|  | Aging Condition | | | XPS Result | | Negative particle | | Retention Rate of Capacity over cycles [%] |
|---|---|---|---|---|---|---|---|---|
|  | Voltage [V] | Temperature [°C] | Duration [hrs] | Li/C | Li/Ti | Average particle size [$\mu$m] | Specific Surface Area [m2·g-1] | |
| Example A-1 | 0.5 | 70 | 24 | 0.33 | 1.20 | 0.9 | 8 | 92 |
| Example A-2 | 0.5 | 80 | 6 | 0.20 | 4.80 | 0.9 | 8 | 80 |
| Example A-3 | 0.5 | 60 | 24 | 0.50 | 0.55 | 0.9 | 8 | 82 |
| Example B-1 | 0.5 | 70 | 24 | 0.28 | 2.10 | 0.9 | 8 | 89 |

(continued)

| | Aging Condition | | | XPS Result | | Negative particle | | Retention Rate of Capacity over cycles [%] |
|---|---|---|---|---|---|---|---|---|
| | Voltage [V] | Temperature [°C] | Duration [hrs] | Li/C | Li/Ti | Average particle size [$\mu$m] | Specific Surface Area [m2·g-1] | |
| Example B-2 | 0.5 | 70 | 24 | 0.32 | 1.90 | 0.9 | 8 | 90 |
| Example B-3 | 0.5 | 70 | 24 | 0.27 | 3.10 | 0.9 | 8 | 86 |
| Example B-4 | 0.5 | 70 | 24 | 0.27 | 3.00 | 0.9 | 8 | 86 |
| Example B-5 | 0.5 | 70 | 24 | 0.26 | 3.50 | 0.9 | 8 | 85 |
| Example B-6 | 0.5 | 70 | 24 | 0.34 | 1.70 | 0.9 | 8 | 91 |
| Example B-7 | 0.5 | 70 | 24 | 0.29 | 3.20 | 0.9 | 8 | 84 |
| Example C-1 | 0.5 | 70 | 24 | 0.27 | 2.80 | 0.9 | 8 | 85 |
| Example C-2 | 0.5 | 70 | 24 | 0.30 | 2.00 | 0.9 | 8 | 88 |
| Example C-3 | 0.5 | 70 | 24 | 0.30 | 2.00 | 0.9 | 8 | 89 |
| Example C-4 | 0.5 | 70 | 24 | 0.27 | 2.20 | 0.9 | 8 | 87 |
| Example C-5 | 0.5 | 70 | 24 | 0.44 | 4.30 | 0.9 | 8 | 82 |
| Example C-6 | 0.5 | 70 | 24 | 0.43 | 4.10 | 0.9 | 8 | 80 |
| Example C-7 | 0.5 | 70 | 24 | 0.45 | 4.10 | 0.9 | 8 | 78 |
| Example D-1 | 0.5 | 70 | 24 | 0.40 | 1.25 | 0.6 | 12 | 71 |
| Example D-2 | 0.5 | 70 | 24 | 0.41 | 1.33 | 1.2 | 7 | 73 |
| Comparative Example A-1 | 2.4 | 25 | 0 | 0.73 | 0.40 | 0.9 | 8 | 58 |
| Comparative Example A-2 | 2.4 | 80 | 12 | 0.17 | 5.50 | 0.9 | 8 | 68 |
| Comparative Example D-1 | 2.4 | 25 | 0 | 0.75 | 0.38 | 0.6 | 12 | 48 |
| Comparative Example D-2 | 2.4 | 25 | 0 | 0.76 | 0.36 | 1.2 | 7 | 51 |

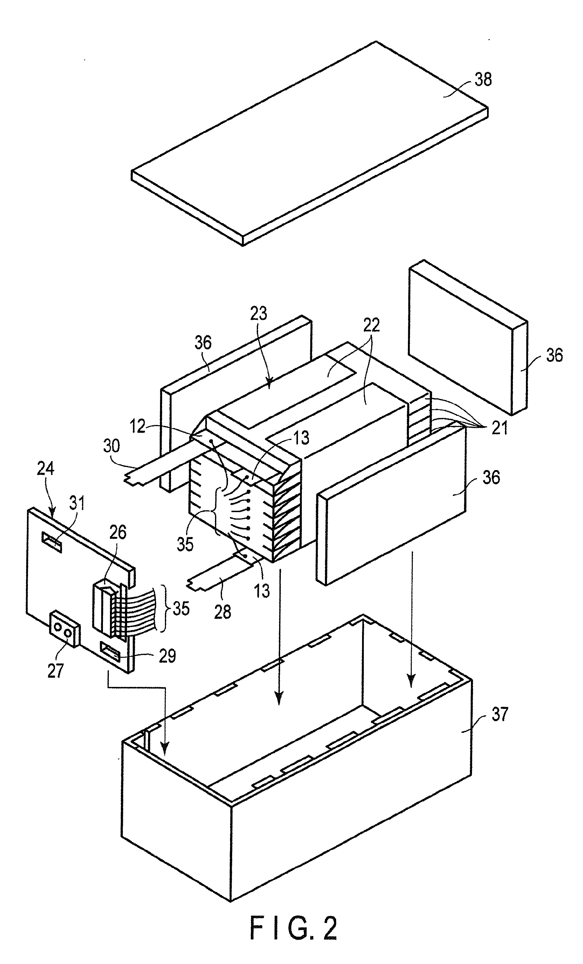

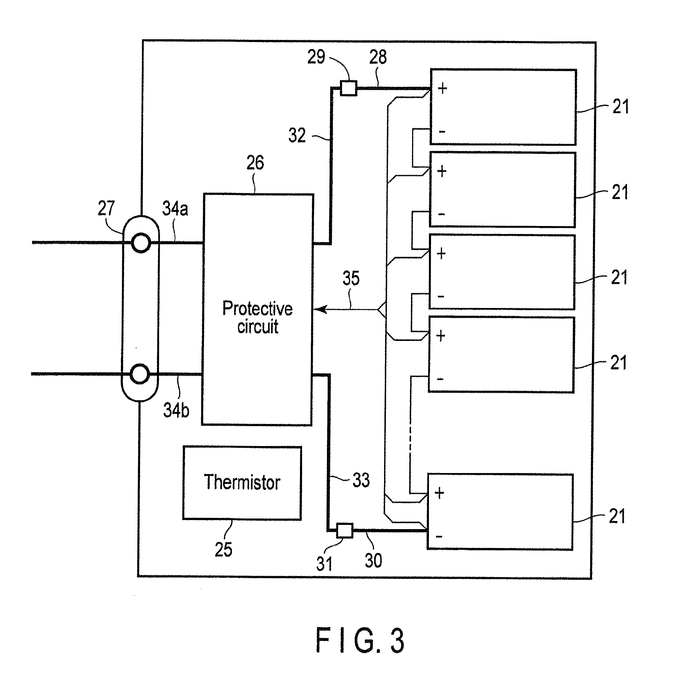

Hereinafter, a battery pack according to another embodiment will be described. The battery pack has one or a plurality of the above-described nonaqueous electrolyte secondary battery (unit cell). In the case where the plurality of unit cells is provided, the unit cells are electrically connected in series or in parallel. The battery pack will be described with reference to FIG. 2 and FIG. 3.

The plurality of unit cells 21 formed of flattened nonaqueous electrolyte secondary batteries are stacked in such a manner that the negative electrode terminals 12 and the positive electrode terminals 13 extended outward are oriented to an identical direction and fastened by an adhesive tape 22 to form an battery module 23. The unit cells 21 are electrically connected to one another in series as shown in FIG. 3.

A printed wiring board 24 is so disposed as to face lateral surfaces of the unit cells 21 from which the negative electrode terminals 12 and the positive electrode terminals 13 are extended. On the printed wiring board 24, a thermistor 25, a protective circuit 26, and an energizing terminal 27 for an external instrument are mounted as shown in FIG. 3. An insulation plate (not shown) is provided on a surface of a protective circuit substrate 24 facing to the battery module 23 in order to avoid unnecessary connection to the wirings of the battery module 23.

A positive electrode lead 28 is connected to the positive electrode terminal 13 positioned at the lowermost layer of the battery module 23, and a leading end thereof is inserted into a positive electrode connector 29 of the printed wiring board 24 to establish electrical connection. A negative electrode lead 30 is connected to the negative electrode terminal 12 positioned at the uppermost layer of the battery module 23, and an end thereof is inserted into a negative electrode connector 31 of the printed wiring board 24 to establish electrical connection. The connectors 29 and 31 are connected to the protective circuit 26 via wirings 32 and 33 formed on the printed wiring board 24.

The thermistor 25 detects a temperature of the unit cells 21, and a detection signal thereof is sent to the protective circuit 26. The protective circuit 26 is capable of breaking a plus wiring 34a and a minus wiring 34b between the protective circuit 26 and the energizing terminal 27 for external instrument under predetermined conditions. The predetermined conditions mean a detection temperature of the thermistor 25 which is equal to or higher than a predetermined temperature, for example. Also, the predetermined conditions mean a detection of overcharge, overdischarge, overcurrent, or the like of the unit cell 21. The detection of overcharge or the like may be performed on each of the unit cells 21 or on the entire unit cells 21. In the case where the detection is performed on each of the unit cells 21, a battery voltage may be detected, or a positive electrode potential or a negative electrode potential may be detected. In the latter case, a lithium electrode to be used as a reference electrode is inserted into each of the unit cells 21. In the case of FIG. 2 and FIG. 3, a wiring 35 for voltage detection is connected to each of the unit cells 21, and detection signals are sent to the protective circuit 26 via the wirings 35.

A protection sheet 36 made from a rubber or a resin is provided on each of three surfaces of the battery module 23 except for the lateral surface from which the positive electrode terminals 13 and the negative electrode terminals 12 are projected.

The battery module 23 is housed in a housing container 37 together with the protection sheets 36 and the printed wiring board 24. In other words, the protection sheets 36 are disposed beside both of inner lateral surfaces in a length direction and an inner lateral surface in a width direction of the housing container 37, and the printed wiring board 24 is disposed beside the opposite inner lateral surface in the width direction. The battery module 23 is positioned in a space defined by the protection sheets 36 and the printed wiring board 24. A lid 38 is attached to a top surface of the housing container 37.

The battery module 23 may be fixed by using a heat-shrinkable tape in place of the adhesive tape 22. In this case, the protection sheets are disposed beside the lateral surfaces of the battery module, and a heat-shrinkable tube is wound around, followed by heat-shrinking the heat-shrinkable tube, thereby banding the battery module.

Though the mode of in series connecting the unit cells 21 is shown in FIG. 2 and FIG. 3, parallel connection may be employed in order to increase the battery capacity. The battery module packs may be connected in series or in parallel.

Also, the mode of the battery pack may appropriately vary depending on the intended use. As the intended use of the battery pack, those in which the cycle property at large current characteristics is desired are preferred. More specifically, examples of the intended use include a usage as a power source for a digital camera and an in-vehicle usage in a two-wheel or four-wheel hybrid electric car, a two-wheel or four-wheel electric car, and an electric power-assisted bicycle. The in-vehicle usage is suitable.

The negative electrode active material $Li_4Ti_5O_{12}$ used in the batteries of Examples A, Examples B, and Examples C had an average operation potential of 1.55 V. The negative electrode active material $TiO_2$ used in Example D-1 and Comparative Example D-1 had an average operation potential of 1.50 V. $TiO_2$ (B) used in Example D-2 and Comparative Example D-2 had an average operation potential of 1.60V.

Each of the nonaqueous electrolyte secondary batteries of Comparative Example A-1, Comparative Example D-1, and Comparative Example D-2 was charged to 2.8 V at the current value of 0.2 C in the 25°C environment and then discharged to 2.4 V at the current value of 0.2 C. In other words, the aging was not conducted in these Comparative Examples. Therefore, the cycle capacity retention thereof was low as compared to the nonaqueous electrolyte secondary batteries of Examples.

In Comparative Example A-2, the produced nonaqueous electrolyte secondary battery was charged to 2.8 V at the current value of 0.2 C in the 25°C environment and then discharged to 2.4 V at the current value of 0.2 C, followed by the aging of leaving to stand in the 80°C environment for 12 hours. In Comparative Example A-2, cycle capacity retention was low as compared to the nonaqueous electrolyte secondary batteries of Examples since the aging was conducted without performing sufficient discharge.

Hereinafter, a content of B and a content of S in the nonaqueous electrolytes provided in the nonaqueous electrolyte secondary batteries of Examples and Comparative Examples will be described.

In each of the nonaqueous electrolytes provided in the nonaqueous electrolyte secondary batteries of Examples and Comparative Examples, the content of at least one element selected from B and S is within the range of $1 \times 10^{-5}$ to 10 wt%. Therefore, a difference among the cycle properties caused by resistances of the nonaqueous electrolytes is considered to be small in the nonaqueous electrolyte secondary batteries of Examples and Comparative Examples.

Some of the embodiments of the present invention are described in the foregoing, and the embodiments are described by way of example and are not intended to limit the scope of the invention. These novel embodiments can be carried out in other various modes, and various omissions, replacements, and modifications are possible within the range which does not deviate from the spirit of the invention. The embodiments and the modifications are included in the scope and the spirit of the invention and are included in the scope equivalent to that of the invention recited in claims.

Reference Signs List

1: Negative electrode; 2: Separator; 3: Positive electrode; 4: Negative electrode lead tub; 5: Positive electrode lead tub; 10: Container; 11: Lid; 12: Negative electrode terminal; 13: Positive electrode terminal; 21: Unit cell; 23: Battery module; 24: Printed wiring board; 25: Thermistor; 26: Protective circuit; 37: Housing container; 38: Lid.

**Claims**

1.  A nonaqueous electrolyte secondary battery comprising:

    a positive electrode;
    a negative electrode;
    a separator provided between the positive electrode and the negative electrode; and
    a nonaqueous electrolyte,
    wherein the negative electrode comprises a titanium composite oxide of which a lithium absorption/release reaction potential is higher than 0.5 V vs. Li/Li$^+$;
    the nonaqueous electrolyte comprises at least one element selected from B and S; and
    the negative electrode has a Li/C composition ratio of 0.20 to 0.50 and a Li/Ti composition ratio of 0.5 to 5.0 in an element composition of a surface of the negative electrode measured by X-ray photoelectron spectroscopy.

2.  The nonaqueous electrolyte secondary battery according to claim 1, wherein a content of the at least one element in the nonaqueous electrolyte is $1 \times 10^{-5}$ to 10 wt%.

3.  The nonaqueous electrolyte secondary battery according to claim 1 or 2, wherein the titanium composite oxide of which the lithium absorption/release reaction potential is higher than 0.5 V vs. Li/Li$^+$ is lithium titanate represented by a chemical formula $Li_{4+x}Ti_5O_{12}$ (wherein $-1 \leq x \leq 3$); the lithium titanate has an average particle size of 0.05 to 2 $\mu$m; and the lithium titanate has a specific surface area of 2 to 25 m$^2$/g.

4.  The nonaqueous electrolyte secondary battery according to any one of claims 1 to 3, wherein the nonaqueous electrolyte comprises at least one selected from the group consisting of lithium tetrafluoroborate (LiBF$_4$), lithium bis(oxalate)borate (LiBOB), lithium difluoro(oxalate)borate (LiBF$_2$(C$_2$O$_4$)), lithium bis(malonate)borate, lithium bis(succinate)borate, and lithium difluoro(trifluoro-2-oxide-2-trifluoro-methylpropionate(2-)-0,0)borate.

5.  The nonaqueous electrolyte secondary battery according to any one of claims 1 to 4, wherein the nonaqueous electrolyte comprises at least one selected from the group consisting of ethylene sulfite, propylene sulfite, 1,2-ethane sultone, 1,3-propane sultone, 1,4-butane sultone, 1,5-pentane sultone, 1,3-propene sultone, and 1,4-butylene sultone.

6.  The nonaqueous electrolyte secondary battery according to any one of claims 1 to 5, wherein the nonaqueous electrolyte comprises 30 to 90 wt% of propylene carbonate.

7.  A battery pack comprising the nonaqueous electrolyte secondary battery defined in any one of claims 1 to 6.

F I G. 1

# FIG. 2

F I G. 3

## INTERNATIONAL SEARCH REPORT

International application No.

PCT/JP2013/056860

A. CLASSIFICATION OF SUBJECT MATTER

*H01M10/052*(2010.01)i, *H01M4/131*(2010.01)i, *H01M4/485*(2010.01)i, *H01M10/0568*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01M10/052, H01M4/131, H01M4/485, H01M10/0568, H01M10/0569

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2013-045759 A (Toshiba Corp.), 04 March 2013 (04.03.2013), claim 3; paragraphs [0035], [0065] (Family: none) | 1-7 |
| X | JP 2008-091327 A (GS Yuasa Corp.), 17 April 2008 (17.04.2008), claims 2, 7; paragraphs [0028], [0035] & US 2010/0178570 A1 & WO 2008/029899 A1 | 1-7 |
| A | JP 2003-163029 A (Matsushita Electric Industrial Co., Ltd.), 06 June 2003 (06.06.2003), claim 1 (Family: none) | 1-7 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 11 April, 2013 (11.04.13) | 23 April, 2013 (23.04.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/056860

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2007-042440 A  (Sanyo Electric Co., Ltd.), 15 February 2007 (15.02.2007), claim 1 (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007053083 A

- JP 2008091327 A